# DEMANDE DE BREVET EUROPEEN

(11) **EP 3 783 166 A1**
(43) Date de publication de la demande: **24.02.2021**
(21) Numéro de dépôt: 20188522.5
(22) Date de dépôt: 30.07.2020
(51) Int. Cl.: E04F 13/08, E04B 1/80, E04B 1/76

(54) **DISPOSITIF D'ENTRETOISEMENT COMPRENANT UN KIT DE FIXATION D'UN SYSTEME DE DOUBLAGE SUR UNE STRUCTURE A DOUBLER**

(30) Priorité: 20.08.2019 FR 1909290
(71) Demandeur: SAINT-GOBAIN ISOVER, 92400 Courbevoie (FR)
(72) Inventeur: MOREAU, Sébastien, 93300 AUBERVILLIERS (FR)
(74) Mandataire: Saint-Gobain Recherche

(57) **Abrégé**

La présente invention a pour objet un kit de fixation d'un système de doublage (100) sur une structure à doubler (200), notamment une toiture, un mur (222) ou un plancher, le système de doublage (100) comprenant au moins une couche d'isolation (110) et un parement, la couche d'isolation (110) comprenant au moins deux panneaux d'isolation (111) juxtaposés, le kit de fixation comprenant au moins un moyen d'ancrage à la structure à doubler (200), au moins un plateau de maintien de la couche d'isolation (110) et au moins une platine de fixation (320) destinée à la fixation du parement le moyen d'ancrage comprenant au moins une aile de positionnement de la couche d'isolation (110).

## Description

La présente invention concerne le domaine des systèmes de doublage de structures à doubler du type toiture, mur ou plancher. Plus particulièrement, la présente invention concerne le domaine des systèmes de doublage comprenant au moins une couche d'isolation.

Les systèmes de doublage de structures à doubler comprennent, de façon connue, au moins une ossature, par exemple métallique, sur laquelle sont fixés des panneaux de construction, par exemple des plaques de plâtre ou de bois Les panneaux de constructions sont fixés sur l'ossature de sorte qu'un espace interne est généré entre le panneau de construction concerné et la structure à doubler et des panneaux acoustiquement et/ou thermiquement isolants peuvent ainsi être disposés dans cet espace interne. Ces panneaux acoustiquement et/ou thermiquement isolants sont fixés par des moyens de fixation classiques, du type vis, clous ou agrafes, à l'ossature du système de doublage.

Les camions frigorigènes ou les réfrigérateurs sont aujourd'hui équipés de panneaux thermiquement isolants qui présentent une épaisseur très inférieure à l'épaisseur des panneaux thermiquement isolants aujourd'hui utilisés dans les constructions de bâtiments immobiliers. L'intégration de tels panneaux dans les constructions de bâtiments immobiliers permettrait ainsi d'améliorer l'isolation thermique de tels bâtiments, tout en réduisant l'épaisseur totale des toitures, planchers, ou plafonds ainsi équipés.

Ces panneaux isolants comprennent un matériau mis sous vide dans une enveloppe. Les propriétés d'isolation thermique et de tenue mécanique de ces panneaux sont notamment liées au fait que le matériau, quel qu'il soit, est maintenu sous vide. Ces panneaux thermiquement isolants sont par exemple composés de poudre de silice encapsulée sous vide dans une feuille d'aluminium. La silice étant mise en vrac dans ces feuilles d'aluminium, la moindre fuite dans ces feuilles d'aluminium fait perdre toute sa tenue mécanique au panneau concerné et donc également ses propriétés d'isolation thermique. Autrement dit, il est impossible de fixer de tels panneaux directement sur l'ossature du système de doublage en utilisant les moyens de fixation classiques exposés ci-dessus, au risque d'endommager ces panneaux et de rompre le maintien sous vide et par conséquent de leur faire perdre leurs propriétés thermiques et mécaniques, les rendant alors inutilisables.

La présente invention vise à résoudre au moins ce problème en proposant un kit de fixation d'un système de doublage sur une structure à doubler permettant une fixation des panneaux d'isolation sans traumatisme, c'est-à-dire sans qu'un quelconque moyen de fixation de traverse le(s) panneau(x) d'isolation concerné(s).

Un objet de la présente invention concerne ainsi un kit de fixation d'un système de doublage sur une structure à doubler, notamment une toiture, un mur ou un plancher, le système de doublage comprenant au moins une couche d'isolation et un parement, la couche d'isolation comprenant au moins deux panneaux d'isolation juxtaposés, le kit de fixation comprenant au moins un moyen d'ancrage à la structure à doubler, au moins un plateau de maintien de la couche d'isolation, et au moins une platine de fixation destinée à la fixation du parement, le moyen d'ancrage comprenant au moins une aile de positionnement de la couche d'isolation.

L'invention vise également un dispositif d'entretoisement comprenant au moins un kit de fixation selon l'invention, ce dispositif d'entretoisement comprenant au moins
- le moyen d'ancrage à ladite structure à doubler,
- l'aile de positionnement des panneaux d'isolation comportant au moins une première surface d'appui destinée à recevoir un chant d'au moins un panneau d'isolation,
- le plateau de maintien, s'étendant transversalement à la première surface d'appui de l'aile de positionnement, le plateau de maintien comprenant au moins un premier moyen de fixation configuré pour permettre sa fixation sur l'aile de positionnement, et
- la platine de fixation munie d'au moins une deuxième surface d'appui destinée à recevoir le parement, la platine de fixation comprenant au moins un deuxième moyen de fixation pour permettre sa fixation sur l'aile de positionnement ou sur le plateau de maintien.

Ainsi, selon l'invention, les panneaux d'isolation formant la couche d'isolation sont, d'une part supportés par la première surface d'appui formée sur l'aile de positionnement et d'autre part maintenus entre le moyen d'ancrage qui est fixé à la structure à doubler et le plateau de maintien quant à lui au moins fixé sur l'aile de positionnement. Autrement dit, la surface d'appui formée sur l'aile de positionnement est configurée pour supporter au moins deux panneaux d'isolation. Particulièrement, cette surface d'appui est configurée pour supporter au moins deux panneaux d'isolation qui s'étendent, respectivement, dans un plan parallèle à un plan d'extension principal du moyen d'ancrage. On comprend ainsi que la couche d'isolation, formée d'au moins deux panneaux d'isolation, est maintenue en position sans qu'aucun moyen de fixation ne la traverse. Autrement dit, la couche d'isolation est maintenue en position, tout en conservant son intégrité.

Selon une caractéristique de la présente invention, l'au moins un moyen d'ancrage comprend une platine d'ancrage fixée à la structure à doubler par au moins un troisième moyen de fixation. Avantageusement, les deux panneaux d'isolation supportés par la surface d'appui formée sur l'aile de positionnement s'étendent, respectivement, dans un plan parallèle à un plan d'extension principal de la platine d'ancrage du moyen d'ancrage. Par exemple, l'au moins un troisième moyen de fixation comprend au moins un trou adapté pour recevoir une vis de fixation. Selon l'invention, le trou du troisième moyen de fixation peut être pré-percé ou bien réalisé directement au cours du vissage de la vis de fixation.

Selon une caractéristique de l'invention, la platine d'ancrage et l'aile de positionnement forment une structure en T ou en L. En d'autres termes, un premier plan dans lequel s'inscrit principalement la platine d'ancrage et un deuxième plan dans lequel s'inscrit principalement l'aile de positionnement sont transversaux l'un par rapport à l'autre. Les deux panneaux d'isolation supportés par la surface d'appui formée sur l'aile de positionnement s'étendent ainsi, respectivement, dans un plan parallèle au premier plan dans lequel s'inscrit principalement la platine d'ancrage. Selon un exemple d'application de la présente invention, un angle formé entre le premier plan et le deuxième plan peut être égal, ou sensiblement égal à 90°.

Selon une autre caractéristique de l'invention, l'aile de positionnement et le plateau de maintien forment une structure en T ou en L. En d'autres termes, le deuxième plan dans lequel s'étend principalement l'aile de positionnement et un troisième plan dans lequel s'étend principalement le plateau de maintien sont transversaux. Optionnellement, un angle formé entre le deuxième plan et le troisième plan peut être égal ou sensiblement égal à 90°.

Selon l'invention, la platine d'ancrage et l'aile de positionnement sont solidaires l'une de l'autre. Par exemple, la platine d'ancrage et l'aile de positionnement peuvent former un ensemble monobloc, c'est à dire un unique ensemble qui ne peut être séparé sans entrainer la détérioration de la platine d'ancrage et/ou de l'aile de positionnement. Selon une caractéristique de la présente invention, la platine d'ancrage peut présenter une forme carrée ou circulaire. Avantageusement, cela permet de positionner le dispositif d'entretoisement, et plus particulièrement la platine d'ancrage de ce dernier selon au moins au moins deux positions. La platine d'ancrage étant solidaire de l'aile de positionnement, et donc de la première surface d'appui ménagée sur cette aile de positionnement, on comprend qu'on peut ainsi choisir un sens de montage - verticalement ou horizontalement ou en oblique par rapport à la structure à doubler - des panneaux d'isolation sur cette première surface d'appui, en fonction de l'encombrement de l'environnement de la structure à doubler.

Par exemple, la platine d'ancrage présente une hauteur égale, ou sensiblement égale, à 100 mm ou à 150 mm. Lorsque la platine d'ancrage est carrée, on comprend que la hauteur de cette platine d'ancrage correspond à une dimension mesurée entre deux bords parallèles de cette platine d'ancrage, selon une direction perpendiculaire à ces bords. Si la platine d'ancrage est circulaire alors un diamètre de cette platine d'ancrage est compris entre 40 mm et 100 mm.

Selon un exemple de réalisation de la présente invention, la platine d'ancrage porte au moins un retour s'étendant transversalement à ladite platine d'ancrage et dans une direction opposée à l'aile de positionnement. Selon cet exemple de réalisation, un trou oblong est ménagé dans le retour de la platine d'ancrage, ce trou oblong étant configuré pour recevoir un organe de fixation permettant la fixation de la platine d'ancrage sur la structure à doubler. Avantageusement, on comprend que l'utilisation d'un trou oblong permet de solidariser la platine d'ancrage sur un côté de la structure à doubler, plutôt que sur une face de cette structure à doubler orientée vers la pièce à isoler. Autrement dit, ce trou oblong confère un degré de liberté à la fixation du dispositif d'entretoisement sur la structure à doubler, ce qui permet d'aligner au mieux l'ensemble des dispositifs d'entretoisement utilisés sur une même structure à doubler, de sorte à aligner à la fois les ailes de positionnement et les platines de fixation respectives de ces dispositifs d'entretoisement, et donc, in fine, d'aligner correctement les panneaux d'isolation reçus sur les ailes de positionnement et les parements fixés aux platines de fixation.

Selon l'invention, le premier moyen de fixation comprend au moins une ouverture ménagée dans le plateau de maintien et au moins un premier moyen de blocage en position de l'aile de positionnement par rapport au plateau de maintien, l'aile de positionnement traversant le plateau de maintien par l'au moins une ouverture. Par exemple, l'au moins un premier moyen de blocage peut être une vis qui traverse au moins l'aile de positionnement et le plateau de maintien. Cette vis peut être reçue dans des orifices pré-percés, respectivement, dans l'aile de positionnement et dans le plateau de maintien. Alternativement, ces orifices peuvent être percés directement au cours du vissage de la vis. Par exemple, l'au moins une ouverture ménagée dans le plateau de maintien peut prendre la forme d'une fente délimitée par un renfort principal qui s'étend depuis le plateau de maintien, en direction de la platine de fixation, l'au moins une vis traverse alors l'aile de positionnement et le renfort principal qui délimite l'au moins une ouverture.

Selon un exemple de réalisation de la présente invention, l'aile de positionnement est divisée, à son extrémité distale opposée au moyen d'ancrage, en deux branches s'étendant dans une direction de doublage et parallèles l'une à l'autre. On entend par « direction de doublage », une direction le long de laquelle sont alignés le moyen d'ancrage, le plateau de maintien et la platine de fixation du dispositif d'entretoisement. Selon cet exemple de réalisation, le premier moyen de fixation comprend alors deux ouvertures ménagées à travers le plateau de maintien, chaque ouverture étant adaptée à recevoir l'une des branches de l'aile de positionnement.

Optionnellement, les deux branches de l'aile de positionnement peuvent délimiter entre elles une zone de réglage abritant, au moins partiellement, l'au moins un premier moyen de blocage du premier moyen de fixation. L'au moins un premier moyen de blocage peut par exemple comprendre au moins deux crans ménagés sur au moins l'une des branches de l'aile de positionnement et au moins une dent portée par le plateau de maintien, l'au moins une dent étant adaptée pour coopérer avec les au moins deux crans pour bloquer la position du plateau de maintien par rapport à l'aile de positionnement. Avantageusement, on comprend que selon que la dent coopère avec l'un ou l'autre des crans ménagés dans la zone de réglage, une distance entre le plateau de maintien et la platine d'ancrage solidaire de l'aile de positionnement est modifiée. Autrement dit, cet exemple de réalisation de l'au moins un premier moyen de blocage permet ainsi de maîtriser la distance entre le plateau de maintien et la platine d'ancrage solidaire de l'aile de positionnement, de sorte à autoriser l'insertion de panneaux d'isolation de différentes épaisseurs contre la première surface d'appui portée par l'aile de positionnement, sans pour autant laisser apparaitre un jeu entre le panneau d'isolation et le support de fixation selon l'invention.

De façon complémentaire, selon l'exemple de réalisation dans lequel l'aile de positionnement comprend deux branches, ces dernières présentent des longueurs identiques, ces longueurs participant à définir une zone de garde ménagée entre le plateau de maintien et la platine de fixation. On entend ici par « longueur » une dimension mesurée parallèlement à la direction de doublage entre une tranche de l'aile de positionnement de laquelle émergent les branches et leur extrémité distale opposée au moyen d'ancrage. La zone de garde correspond quant à elle à une zone adaptée pour recevoir, par exemple, de la plomberie ou des câbles électriques. Selon ce même exemple de réalisation, la première surface d'appui s'étend entre la platine d'ancrage et la tranche de l'aile de positionnement à partir de laquelle cette aile de positionnement est divisée en les deux branches. Autrement dit, la longueur des branches de l'aile de positionnement participe également à déterminer une dimension de la première surface d'appui mesurée parallèlement à la direction de doublage.

Selon un exemple de réalisation de l'invention, la platine de fixation et le plateau de maintien sont rendus solidaires l'un de l'autre par une tige reçue dans un évidement. Autrement dit, selon cet exemple de réalisation, l'un parmi la platine de fixation et le plateau de maintien est pourvu d'une tige s'étendant selon la direction de doublage, et l'autre parmi la platine de fixation et le plateau de maintien comprend au moins un évidement engagée sur ladite tige. Par exemple, au moins une nervure primaire est formée à la périphérie de ladite tige et l'évidement présente au moins une nervure secondaire faisant saillie vers l'intérieur de l'évidement, la nervure secondaire étant adaptée pour coopérer avec l'au moins une nervure primaire pour le blocage relatif de la platine de fixation et du plateau de maintien en translation dans la direction de doublage. Plus particulièrement, l'au moins une nervure primaire s'étend seulement sur une partie de la périphérie de la tige de sorte que cette dernière est insérée dans l'évidement puis un quart de tour est réalisé de sorte à ce que l'au moins une nervure primaire soit bloquée en translation le long de la direction de doublage en venant en butée contre l'au moins une nervure secondaire qui s'étend en saillie dans l'évidement. Avantageusement, cet exemple de réalisation permet un blocage simple et rapide à réaliser de la platine de fixation par rapport au plateau de maintien.

Selon, l'invention, la deuxième surface d'appui présente au moins une dimension transversale supérieure ou égale à 30 mm, de préférence supérieure ou égale à 45 mm. La dimension transversale minimale de la platine de fixation est quant à elle supérieure ou égale à 30 mm, de préférence supérieure ou égale à 45 mm. Avantageusement, la dimension transversale de la deuxième surface d'appui peut être égale à 150 mm.

Selon l'invention, une face du plateau de maintien tournée vers le moyen d'ancrage est plane. Autrement dit, cette face du plateau de maintien est dépourvue d'aspérités évitant ainsi d'endommager le panneau d'isolation.

Le dispositif d'entretoisement selon l'invention peut également comprendre au moins un tunnel borgne qui s'étend depuis la platine de fixation, en direction du plateau de maintien, ce tunnel borgne recevant l'extrémité distale de l'aile de positionnement opposée au moyen d'ancrage. Une longueur de ce tunnel borgne, c'est-à-dire une dimension mesurée parallèlement à la direction de doublage entre la platine de fixation et une entrée de ce tunnel borgne, détermine une dimension de la zone de garde adapté pour recevoir différents élément, tels que, par exemple, de la plomberie ou des câbles électriques. Avantageusement, ce tunnel borgne assure aussi la formation d'un espace minimum entre la platine de fixation et le plateau de maintien qui permet de fixer le parement à la platine de fixation, par exemple grâce à une vis, sans endommager la couche d'isolation.

La présente invention concerne également un système de doublage pour une structure comprenant une pluralité de dispositifs d'entretoisement selon l'invention fixés sur la structure à doubler, une couche d'isolation formée d'une pluralité de panneaux d'isolation juxtaposés, chaque panneau d'isolation comprenant deux faces principales et au moins un chant reliant lesdites faces principales, et un parement, dans lequel l'au moins un chant d'au moins un panneau d'isolation est en appui sur au moins une aile de positionnement d'un dispositif d'entretoisement, le plateau de maintien dudit dispositif d'entretoisement est en appui contre une face principale dudit panneau d'isolation, et le parement est en appui direct sur la deuxième surface d'appui de la platine de fixation. Plus particulièrement, tel que précédemment évoqué, le chant d'au moins un panneau est en appui sur la première surface d'appui de l'aile de positionnement. Avantageusement, les chants d'au moins deux panneaux d'isolation peuvent être en appui sur la surface d'appui de l'aile de positionnement. Autrement dit, deux panneaux d'isolation sont alors supportés par la surface d'appui de l'aile de positionnement, chaque panneau s'étendant dans un plan parallèle au premier plan dans lequel s'étend principalement la platine d'ancrage du moyen d'ancrage. Selon l'invention, le parement est avantageusement fixé à la platine de fixation. Par exemple, le parement peut être fixé à la platine de fixation Alternativement, le parement peut être fixé à la platine de fixation par des moyens de collage, notamment une colle ou un élément adhésif de type film ou ruban.

Selon l'invention, au moins un des panneaux d'isolation est un panneau sous vide. Avantageusement, tous les panneaux d'isolation formant la couche d'isolation peuvent être des panneaux d'isolation sous vide. Entre d'autres termes, selon l'invention, au moins un des panneaux d'isolation, avantageusement tous les panneaux d'isolation, comprend un matériau mis sous vide dans une enveloppe. Un tel matériau peut par exemple être un matériau fibreux, par exemple à base de fibres de verre ou de roche ou de fibres céramiques et/ou un matériau en poudre tel que de la poudre de silice (par exemple pyrogénée ou précipitée), ce matériau étant le cas échéant mis en forme et cette forme étant conservée une fois mise sous vide. L'enveloppe permettant le maintien sous vide du matériau fibreux ou en poudre peut être formée d'une ou plusieurs couches, par exemple d'un ou plusieurs films plastiques ou polymères, pouvant être le cas échéant être métallisés, ou métalliques, et/ou d'une ou plusieurs couches fibreuses. Une ou des feuilles d'aluminium, ou de polyéthylène, ou de polyéthylène téréphtalate, ou de polypropylène, ou d'acier peuvent notamment former ladite enveloppe, l'épaisseur de chaque couche ou feuille ne dépassant généralement pas 100 µm. L'enveloppe peut le cas échéant être formée de couches et/ou de feuilles différentes selon le coté de l'enveloppe considéré. Selon un exemple d'application de la présente invention, au moins un des panneaux d'isolation comprend de la silice encapsulée sous vide dans au moins une feuille d'aluminium ou dans au moins une feuille en matériau synthétique.

La présente invention concerne enfin un procédé de doublage d'une structure à doubler comprenant au moins une étape de fixation d'au moins deux dispositifs d'entretoisement selon l'invention sur la structure à doubler, une étape de positionnement d'au moins un panneau d'isolation en appui sur les premières surfaces d'appui des ailes de positionnement de chaque dispositif d'entretoisement, au moins une étape de fixation d'un plateau de maintien sur chaque aile de positionnement, au moins une étape de fixation d'une platine de fixation sur chaque plateau de maintien et au moins une étape de fixation d'un parement sur au moins une platine de fixation. Selon une caractéristique de l'invention, l'étape de positionnement peut consister en le positionnement d'au moins deux panneaux d'isolation en appui sur chaque première surface d'appui de chaque aile de positionnement.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] illustre schématiquement, en coupe, un système de doublage selon l'invention fixé à une structure à doubler ;
[Fig. 2] illustre schématiquement une couche d'isolation fixée à une structure à doubler grâce à un kit de fixation selon l'invention ;
[Fig. 3] illustre, en perspective, un dispositif d'entretoisement selon un premier exemple de réalisation de la présente invention ;
[Fig. 4] illustre, selon une première vue éclatée, le dispositif d'entretoisement selon le premier exemple de réalisation de la présente invention ;
[Fig. 5] illustre, selon une deuxième vue éclatée, le dispositif d'entretoisement selon le premier exemple de réalisation de la présente invention ;
[Fig. 6] illustre, en perspective, le dispositif d'entretoisement selon un deuxième exemple de réalisation de la présente invention ;
[Fig. 7] illustre, en vue éclatée, le dispositif d'entretoisement selon le deuxième exemple de réalisation de la présente invention ;
[Fig. 8] illustre, en perspective, une première variante de réalisation du dispositif d'entretoisement applicable au premier exemple de réalisation et au deuxième exemple de réalisation ;
[Fig. 9] illustre, en perspective, une deuxième variante de réalisation du dispositif d'entretoisement applicable au premier exemple de réalisation et au deuxième exemple de réalisation.

Les caractéristiques, variantes et les différentes formes de réalisation de l'invention peuvent être associées les unes avec les autres, selon diverses combinaisons, dans la mesure où elles ne sont pas incompatibles ou exclusives les unes aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

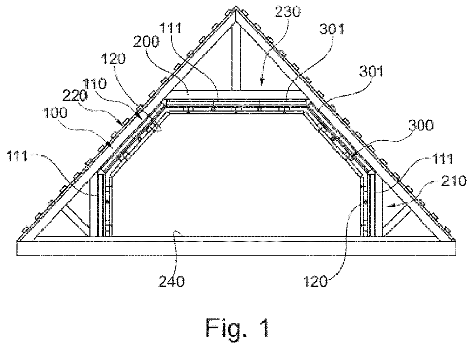

La figure 1 illustre schématiquement, en coupe, un système de doublage 100 selon l'invention fixé à une structure à doubler 200. Plus particulièrement, cette figure 1 illustre une mise en œuvre du système de doublage 100 selon l'invention dans des combles d'une habitation. On note que, selon cet exemple, la structure à doubler 200 comprend à la fois des murs droits 210, c'est-à-dire perpendiculaires à un plancher 240, des murs inclinés 220, et une toiture 230. Bien que ça ne soit pas illustré ici, il est entendu que la structure à doubler pourrait également être formée par le plancher sans sortir du contexte de la présente invention.

Tel qu'illustré, le système de doublage 100 comprend au moins une couche d'isolation 110 et un parement 120 fixés à la structure à doubler 200 grâce à au moins un dispositif d'entretoisement 301, avantageusement une pluralité de dispositifs d'entretoisement 301. Chaque dispositif d'entretoisement 301 comprend au moins kit de fixation 300 qui comprend au moins un moyen d'ancrage sur la structure à doubler, au moins une aile de positionnement de la couche d'isolation issue du moyen d'ancrage et au moins une platine de fixation du parement. Ces dispositifs d'entretoisement 301 sont plus amplement décrits ci-dessous.

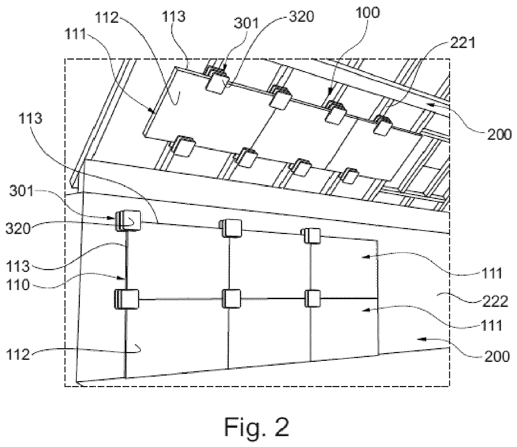

Tel qu'illustré sur les figures 1 et 2, la couche d'isolation 110 comprend une pluralité de panneaux d'isolation 111 juxtaposés les uns aux autres. Ces panneaux d'isolation 111 présentent, chacun, deux faces principales 112 - une seule étant visible sur la figure 2 - et au moins un chant 113 reliant lesdites faces principales 112. Tel qu'illustré, chaque panneau d'isolation 111 comprend au moins deux chants 113 perpendiculaires reliant les faces principales 112 du panneau d'isolation 111 concerné. Par exemple, ces panneaux d'isolation 111 sont des panneaux sous vide et ils comprennent plus particulièrement de la silice en vrac encapsulée sous vide dans une feuille d'aluminium, ou dans une feuille en un matériau synthétique. Avantageusement, les dispositifs d'entretoisement 301 selon l'invention permettent de fixer ces panneaux d'isolation 111 à la structure à doubler 200 sans perçage, découpe, ou autre action qui entraînerait leur dégradation et la perte de leurs propriétés d'isolation thermique.

La figure 2 illustre plus particulièrement la structure à doubler 200 sur laquelle sont fixés une pluralité de dispositifs d'entretoisement 301, ces dispositifs d'entretoisement 301 maintenant les panneaux d'isolation 111 en position. Ainsi, cette figure 2 rend particulièrement visible la platine de fixation 320 de chacun de ces dispositifs d'entretoisement 301. Tel qu'évoqué ci-dessus, ces platines de fixation 320 sont destinées à recevoir le parement. Ce parement peut par exemple comprendre une pluralité de plaques d'un matériau de construction, telles que des plaques de plâtre ou de bois par exemple. Ce parement peut être vissé, ou collé aux platines de fixation 320, par exemple grâce à une colle ou un élément adhésif de type film ou ruban. Il est entendu que tout autre moyen de maintien de ce parement sur les platines de fixation 320 est envisageable sans sortir du contexte de la présente invention.

Cette figure 2 illustre également le fait que le dispositif d'entretoisement 301 est adapté pour être fixé sur différents types de surfaces, telle que par exemple des chevrons 221 d'une charpente, ou bien un mur 222 en béton, en parpaing, en briques ou en bois.

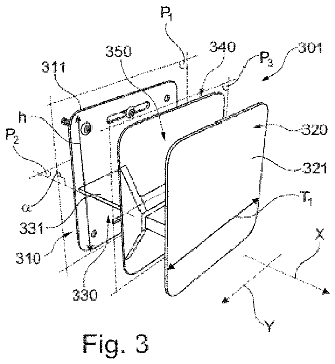

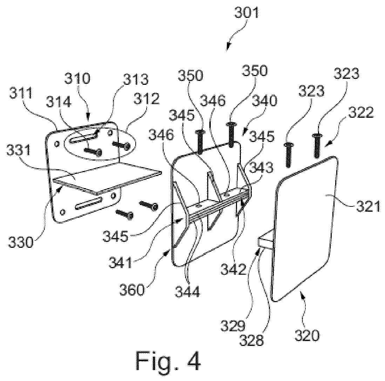

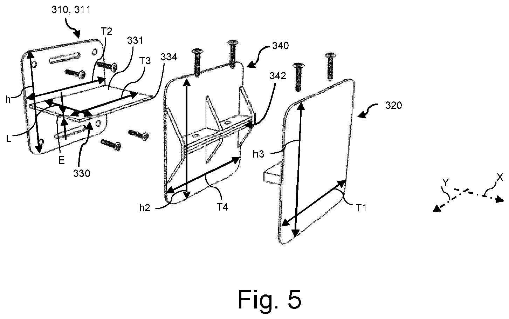

Les figures 3 à 5 illustrent plus particulièrement le dispositif d'entretoisement 301 selon un premier exemple de réalisation de la présente invention, la figure 3 étant une vue, en perspective, du dispositif d'entretoisement 301 assemblé et la figure 4 étant une première vue éclatée de ce dispositif d'entretoisement 301 et la figure 5 étant une deuxième vue éclatée de ce dispositif d'entretoisement 301.

Selon ce premier exemple de réalisation, le dispositif d'entretoisement 301 comprend le moyen d'ancrage 310 à la structure à doubler, une aile de positionnement 330 de la couche d'isolation, un plateau de maintien 340 et la platine de fixation 320 du parement. Tel qu'illustré, le moyen d'ancrage 310, l'aile de positionnement 330 de la couche d'isolation, le plateau de maintien 340 et la platine de fixation 320 sont alignés, dans cet ordre, le long d'une direction de doublage X.

Selon l'exemple illustré ici, le moyen d'ancrage 310 comprend une platine d'ancrage 311 qui s'étend principalement dans un premier plan P1. L'aile de positionnement 330 est quant à elle issue de la platine d'ancrage 311 et elle présente au moins une première surface d'appui 331 destiné à recevoir un panneau d'isolation, et plus particulièrement un chant de ce panneau d'isolation. L'aile de positionnement 330 s'étend principalement dans un deuxième plan P2, transversal et avantageusement perpendiculaire au premier plan P1. Avantageusement, l'aile de positionnement 330 est adaptée pour recevoir au moins deux panneaux d'isolation, chacun de ces panneaux d'isolation s'étendant dans un plan parallèle au première plan P1 dans lequel s'inscrit principalement la platine d'ancrage 311.

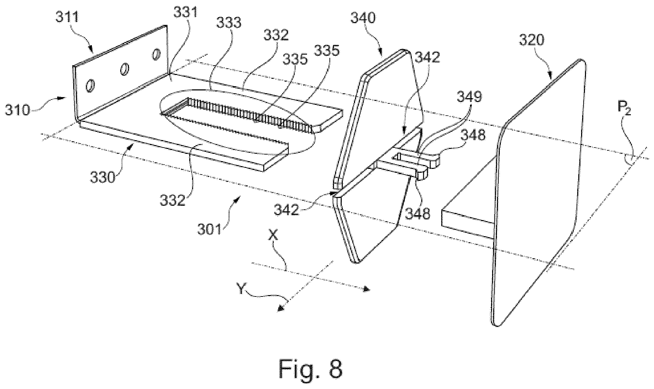

Selon l'exemple illustré, la platine d'ancrage 311 et l'aile de positionnement 331 forment une structure en T, c'est-à-dire qu'un angle α formé entre le premier plan P1 dans lequel s'inscrit principalement la platine d'ancrage 311 et le deuxième plan P2 dans lequel s'inscrit principalement l'aile de positionnement 330 est égal, ou sensiblement égal à 90°. Tel que par exemple illustré sur la figure 8, la platine d'ancrage 311 et la première surface d'appui 331 peuvent, alternativement, former une structure en L, l'angle formé entre le premier plan et le deuxième plan étant également égal, ou sensiblement égal à 90°. Selon l'invention, la platine d'ancrage 311 et l'aile de positionnement 330 forment un ensemble monobloc, c'est-à-dire un unique ensemble qui ne peut être séparé sans entrainer la détérioration de la platine d'ancrage 311 ou de l'aile de positionnement 330.

Avantageusement, la platine d'ancrage 311 présente une forme carrée de sorte qu'elle peut être positionnée selon deux positions perpendiculaires distinctes, en fonction du sens dans lequel on souhaite insérer le panneau d'isolation entre la platine de fixation 311 et le plateau de maintien 340. Autrement dit, on comprend que cette forme carrée de la platine de fixation 311 permet avantageusement d'adapter le montage à l'encombrement de l'environnement. Alternativement, la platine d'ancrage peut présenter une forme circulaire. Ainsi, l'aile de positionnement 330 est placée entre deux panneaux d'isolation qui se jouxtent, l'aile de positionnement 330 pouvant s'étendre le long d'une direction horizontale, ou sensiblement horizontale, ou selon une direction verticale, ou sensiblement verticale. Dans le cas où l'aile de positionnement 330 est horizontale, celle-ci porte deux panneaux d'isolation.

Selon l'invention, la platine d'ancrage 311 présente une hauteur h égale comprise entre 100 mm et 150 mm. Tel que représenté, la hauteur h de cette platine d'ancrage 311 correspond à une dimension, la plus longue, mesurée entre deux bords parallèles de cette platine d'ancrage 311, selon une direction perpendiculaire à ces bords.

Le plateau de maintien 340 s'étend principalement dans un troisième plan P3 transversal au deuxième plan P2 dans lequel s'inscrit principalement la première surface d'appui 331. Selon l'exemple particulier illustré sur les figures 3 à 5, ce troisième plan P3 est perpendiculaire au deuxième plan P2 dans lequel s'inscrit la première surface d'appui 331 et parallèle au premier plan P1 dans lequel s'inscrit principalement la platine de fixation 320.

Ce plateau de maintien 340 est muni d'au moins un premier moyen de fixation 341 configuré pour permettre la fixation de ce plateau de maintien 340 à l'aile de positionnement 330. Selon le premier exemple de réalisation illustré sur les figures 3 et 4, ce premier moyen de fixation 341 comprend au moins une ouverture 342 à travers laquelle s'étend l'aile de positionnement 330 et au moins un premier moyen de blocage 370 du plateau de maintien 340 sur l'aile de positionnement 330. Par exemple, l'ouverture 342 prend la forme d'une fente ménagée au travers d'une plaque constitutive du plateau de maintien 340. Cette ouverture 342 est délimitée par un renfort principal 343 qui s'étend sur toute une largeur du plateau de maintien, c'est-à-dire entre deux bords opposés de ce plateau de maintien 340, en éloignement du plateau de maintien 340, vers la platine de fixation 320. Ce renfort principal 343 comprend au moins deux plaques 344 parallèles agencées à distance l'une de l'autre, cette distance formant l'ouverture 342 et cette distance étant ainsi calculée pour permettre au moins le passage de l'aile de positionnement 330. Chacune de ces plaques 344 est par ailleurs solidaire du plateau de maintien 340 grâce à des renforts secondaires 345. Selon l'exemple illustré, le plateau de maintien 340 comprend trois renforts secondaires 345 agencés à égale distance les uns des autres, le long du renfort principal 343. Tel que représenté, ces renforts secondaires 345 s'étendent transversalement, avantageusement perpendiculairement, au renfort principal 343. On note également que le renfort principal 343 et les renforts secondaires 345 s'étendent en éloignement du plateau de maintien 340, en direction de la platine de fixation 320. Avantageusement, cela permet d'assurer qu'un espace ménagé entre la platine d'ancrage 311 et le plateau de maintien 340 est totalement libre pour recevoir l'un des panneaux d'isolation. De plus, ces panneaux d'isolation peuvent ainsi être agencés bord à bord les uns par rapport aux autres, évitant ainsi la création de ponts thermiques.

Selon l'exemple illustré, le premier moyen de blocage 370 du premier moyen de fixation 341 est formé par au moins une vis. Selon l'exemple illustré sur les figures 3 à 5, le premier moyen de blocage 370 comprend plus particulièrement deux vis. Ces vis sont reçues dans des orifices 346 pré-percés dans le renfort principal 343 qui délimite l'ouverture 342. Ces vis traversent également l'aile de positionnement 330. Selon l'exemple illustré sur les figures 3 à 5, les orifices de réception des vis dans l'aile de positionnement 330 sont réalisés directement au cours du vissage. Il est entendu qu'il ne s'agit que d'un exemple de réalisation et que l'ensemble des orifices pourraient être pré-percés, ou au contraire formés directement au cours du vissage sans sortir du contexte de la présente invention.

On comprend de ce qui précède qu'au moins une face 360 du plateau de maintien 340 est ainsi agencée en appui contre le panneau d'isolation disposé au niveau de la première surface d'appui 331 du dispositif d'entretoisement 301 concerné. Le cas échéant, cette face 360 du plateau de maintien 340 est agencée en appui contre les deux panneaux d'isolation supportés par la première surface d'appui 331 du dispositif d'entretoisement 301 concerné. Plus particulièrement, cette au moins une face 360 du plateau de maintien 340 est agencé en appui contre l'une des faces principales du panneau d'isolation concerné. Avantageusement, cette face 360 est plane, c'est-à-dire qu'elle ne présente aucune aspérité de sorte à ne pas risquer d'endommager le panneau d'isolation concerné.

La platine de fixation 320 comprend quant à elle au moins une deuxième surface d'appui 321 sur laquelle est fixé le parement tel que précédemment décrit. 15. Selon un exemple de l'invention, cette deuxième surface d'appui 321 présente une dimension transversale Tl, c'est-à-dire une dimension mesurée entre deux bords de la deuxième surface d'appui 321 opposés, le long d'une direction transversale Y perpendiculaire à la direction de doublage X, supérieure ou égale à 30 mm, de préférence supérieure ou égale à 45 mm. Selon l'exemple illustré sur les figures, la deuxième surface d'appui 321 présente des dimensions identiques, ou sensiblement identiques, aux dimensions de la platine de fixation 320 évoquées plus haut.

La platine de fixation 320 comprend en outre un deuxième moyen de fixation 322. Selon le premier exemple de réalisation illustré ici, ce deuxième moyen de fixation 322 est configuré pour permettre la fixation de la platine de fixation 320 sur l'aile de positionnement 330. Tel que partiellement visible sur la figure 4, ce deuxième moyen de fixation 322 comprend au moins un deuxième moyen de blocage 323 de la platine de fixation 320 sur l'aile de positionnement 330 et au moins un tunnel borgne 328 qui s'étend depuis la platine de fixation 320 et qui reçoit cette aile de positionnement 330. Autrement dit, ce tunnel borne 328 présente au moins une extrémité ouverte 329 qui reçoit l'aile de positionnement 330 et une extrémité fermée par la platine de fixation 320. Selon l'exemple illustré, le deuxième moyen de blocage 323 prend la forme de deux vis qui traversent le tunnel borgne 328 et l'aile de positionnement 330. De façon similaire à ce qui a été précédemment décrit, ces vis peuvent être reçues dans des alésages pré-percés ou, alternativement, de tels alésages peuvent être réalisés directement au cours du vissage.

En outre, la platine d'ancrage 311 comprend au moins un troisième moyen de fixation 312 configuré pour permettre la fixation de cette platine d'ancrage 311 sur la structure à doubler. Selon l'exemple illustré ici, ce troisième moyen de fixation 312 comprend au moins un trou 313 et une vis de fixation 314 reçue dans l'au moins un trou 313. Avantageusement, on note que ce trou 313 est un trou oblong, ce qui permet de donner un degré de liberté à la fixation de la platine d'ancrage 311 sur la structure à doubler, permettant ainsi une certaine tolérance quant à la largeur des panneaux d'isolation maintenus par les dispositifs d'entretoisement 301 selon l'invention, la largeur d'un panneau étant mesurée entre deux bords opposés de ce panneau, parallèlement à la direction transversale Y illustrée sur les dessins.

On note qu'une zone de garde 350 est également ménagée entre le plateau de maintien 340 et la platine de fixation 320. Avantageusement, cette zone de garde 350 permet de faire passer, par exemple, des câbles d'alimentation électrique, et ainsi cacher ces câbles dans la construction finale. Encore plus avantageusement, cette zone de garde 350 permet de s'assurer que les moyens de fixation utilisés pour fixer le parement sur la platine de fixation 320 ne viennent pas endommager le panneau d'isolation reçu entre la platine d'ancrage 311 et le plateau de maintien 340.

Afin de permettre à chaque dispositif d'entretoisement 301, et plus particulièrement aux premières surfaces d'appui 311 de ces dispositifs d'entretoisement 301, de supporter au moins deux panneaux d'isolation, ces dispositifs d'entretoisement 301 présentent des dimensions particulières détaillées en référence à la figure 5.

Nous allons dans un premier temps nommer chacune de ces dimensions, avant de donner les rapports de ces dimensions les unes par rapport aux autres.

La platine d'ancrage 311 est ainsi définie par au moins sa hauteur h et une dimension transversale T2 mesurée entre deux bords de la platine d'ancrage 311 opposés, le long de la direction transversale Y perpendiculaire à la direction de doublage X.

L'aile de positionnement 330, et plus particulièrement la première surface d'appui 331 formée sur cette aile de positionnement 330 est définie par au moins une longueur L mesurée parallèlement à la direction de doublage X, entre une face du moyen d'ancrage 310 depuis laquelle s'étend l'aile de positionnement 330 et un bord libre 334 de cette aile de positionnement 330, c'est-à-dire un bord de cette aile de positionnement 330 par lequel elle est insérée dans l'ouverture 342 formée dans la plaque constitutive du plateau de maintien 340, et une dimension transversale T3 mesurée entre deux bords de l'aile de positionnement 330 opposés, le long de la direction transversale Y perpendiculaire à la direction de doublage X. En outre, l'aile de positionnement 330 présente une épaisseur E inférieure ou égale à 3 mm. Cette épaisseur E est mesurée entre deux bords de l'aile de positionnement 330 opposés l'un à l'autre, selon une direction perpendiculaire à ces deux bords et perpendiculaire à la direction de doublage X et à la direction transversale Y à cette direction de doublage X. Avantageusement, une telle épaisseur permet de réduire encore les risques de formation de ponts thermiques.

Par exemple, l'aile de positionnement 330 comprend un matériau synthétique. Avantageusement, le moyen d'ancrage 310, l'aile de positionnement 330, le plateau de maintien 320 et la platine de fixation 340 comprennent, respectivement, un matériau synthétique.

Le plateau de maintien 340 est défini par au moins une hauteur h2 mesurée entre deux bords parallèles de ce plateau de maintien 340, selon une direction perpendiculaire à ces bords et par au moins une dimension transversale T4 mesurée entre deux bords du plateau de maintien 340 opposés, le long de la direction transversale Y.

La platine de fixation 320 est quant à elle définie par sa dimension transversale T1 telle que définie ci-dessus, et par au moins une hauteur h3 mesurée entre deux bords parallèles de cette platine de fixation 320, selon une direction perpendiculaire à ces bords.

Afin que la première surface d'appui 331 et l'aile de positionnement 330 puisse supporter au moins deux panneaux d'isolation, la dimension transversale T3 de cette première surface d'appui 331 est supérieure ou égale à 45 mm. Pour les mêmes raisons, la longueur L de cette première surface d'appui 331 est supérieure ou égale à 70mm.

Selon l'invention, un rapport entre une surface de la première surface d'appui 331 de l'aile de positionnement 330 sur une surface du moyen d'ancrage est compris entre 0,59 et 0,73, un rapport entre la surface de la première surface d'appui 331 et une surface du plateau de maintien est compris entre 0,59 et 0,73 et un rapport entre la surface de la première surface d'appui 331 et une surface de la platine de fixation 320 est compris entre 0,59 et 0,73.

Selon un exemple de mise en œuvre de l'invention, les dimensions telles que définies ci-dessus peuvent être les suivantes, exprimées en millimètres :
h = [30 ; 200]
L = [40 ; 120]
h2 = [30 ; 200]
h3 = [30 ; 200]
T1 = [30 ; 200]
T2 = [30 ; 200]
T3 = [27 ; 197]
T4 = [30 ; 200]

Avantageusement, les dimensions telles que définies ci-dessus peuvent être les suivantes, exprimées en millimètres :
h = [50 ; 180]
h2 = [50 ; 180]
h3 = [50; 180]
T1 = [50 ; 180]
T2 = [50 ; 180]
T3 = [47 ; 177]
T4 = [50 ; 180]

Il est entendu qu'il ne s'agit que d'exemples et que les dimensions données dans ces deux listes peuvent être combinées entre elles sans sortir du contexte de la présente invention.

Il résulte de ces dimensions, les rapports donnés dans le tableau suivant, qui exprime, dans chaque colonne, les rapports d'une dimension par rapport aux autres. Il est entendu que les rapports donnés dans ce tableau ne sont pas liés entre eux et peuvent être combinés entre eux sans limitation.

**[Tableau 1]**

| | L | h | h2 | h3 | T1 | T2 | T3 | T4 |
|---|---|---|---|---|---|---|---|---|
| L | | 0,25 | | | 0,25-5 | 0,25 - 5 | 0,22-5 | 0,25-5 |
| h | 0,2 - 4 | | 0,15 - 6,67 | 0,15 - 6,67 | 0,15 - 6,67 | 0,15 - 6,67 | 0,13 - 6,57 | 0,15 - 6,67 |
| h2 | | 0,15 - 6,67 | | | 0,15 - 6,67 | 0,15 - 6,67 | 0,13 - 6,57 | 0,15 - 6,67 |
| h3 | | 0,15 - 6,67 | | | 0,15 - 6,67 | 0,15 - 6,67 | 0,13 - 6,57 | 0,15 - 6,67 |
| T1 | | 0,15 - 6,67 | | | | 0,15 - 6,67 | 0,13 - 6,57 | 0,15 - 6,67 |
| T2 | 0,2 - 4 | 0,15 - 6,67 | 0,15 - 6,67 | 0,15 - 6,67 | 0,15 - 6,67 | | | |
| T3 | 0,2 - 4,4 | 0,95 - 1,16 | 0,95 - 1,16 | 0,95 - 1,16 | 0,95 - 1,16 | | | |
| T4 | 0,2 - 4 | 0,15 - 6,67 | 0,15 - 6,67 | 0,15 - 6,67 | 0,15 - 6,67 | | | |

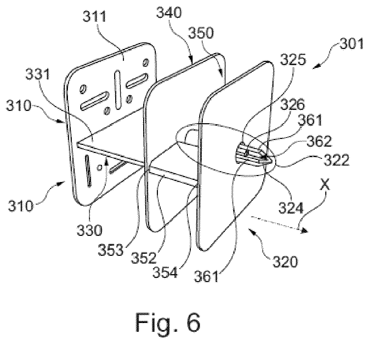

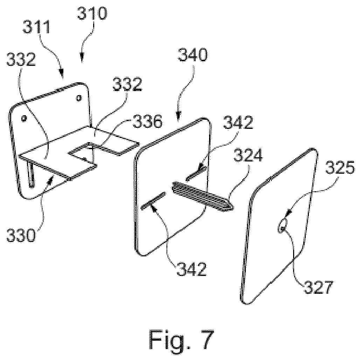

Les figures 6 et 7 illustrent le dispositif d'entretoisement 301 selon un deuxième exemple de réalisation de la présente invention. Ce deuxième exemple de réalisation diffère du premier exemple de réalisation notamment en ce que le deuxième moyen de fixation 322 permet de fixer la platine de fixation 320 sur le plateau de maintien 340, plutôt que sur le moyen d'ancrage 310 comme c'est le cas du premier mode de réalisation décrit ci-dessus. On comprend que, selon ce deuxième exemple de réalisation, le deuxième moyen de fixation 322 est réparti entre la platine de fixation 320 et le plateau de maintien 340. Les dimensions données ci-dessus, en référence à la figure 5, s'appliquent mutatis mutandis à au dispositif d'entretoisement 301 selon le deuxième exemple de réalisation de l'invention.

Tel que représenté, ce deuxième moyen de fixation 322 comprend ainsi une tige 324 qui s'étend parallèlement, ou sensiblement parallèlement, à la direction de doublage X et au moins un évidement 325 configuré pour recevoir cette tige 324. Plus particulièrement, cette tige 324 comprend au moins une nervure primaire 326 formée à la périphérie de cette tige 324, c'est-à-dire sur un périmètre externe de cette tige 324, et l'évidement 325 comprend quant à lui au moins une nervure secondaire 327 qui fait saillie dans l'évidement 325 est qui est destiné à coopérer avec l'au moins une nervure primaire 326 de sorte à solidariser le plateau de maintien 340 avec la platine de fixation 320.

Tel que représenté, la tige 324 présente une section en croix, c'est-à-dire une section à quatre branches 361, l'au moins une nervure primaire 326 étant ménagé dans au moins une rainure 362 délimitée par deux branches 361 successives. Avantageusement, deux nervures primaires 326 sont ménagées dans deux rainures 362 non successives. Ainsi, la tige 324 est insérée dans l'évidement 325 de sorte que la nervure secondaire 327 ménagée dans cet évidement 325 coulisse dans l'une des rainures 362 dépourvue de nervure primaire 326, puis la tige 324 est tournée d'un quart de tour de sorte à ce qu'au moins l'une des nervures primaires 326 ménagées sur cette tige 324 vienne en butée contre la nervure secondaire 327, bloquant ainsi en translation le long de la direction de doublage X, la platine de fixation 320 sur le plateau de maintien 340. On comprend que cet exemple du deuxième moyen de fixation est particulièrement avantageux pour le technicien à qui est destinée l'invention puisqu'il permet un montage simple et rapide de chaque platine de fixation 320 sur chaque plateau de maintien 340.

Selon l'exemple illustré sur les figures 6 et 7, la tige 324 est portée par le plateau de maintien 340 et l'évidement 325 est ménagé au travers de la platine de fixation 320 mais il est entendu que les éléments pourraient être inversés, c'est-à-dire que la tige 324 peut être portée par le platine de fixation 320 et l'évidement 325 peut être ménagé dans le plateau de maintien 340, sans sortir du contexte de la présente invention.

Quelle que soit la répartition choisie, on comprend que ce deuxième exemple de réalisation présente l'avantage de réduire le nombre de moyens de fixation à mettre en place. Notamment, ce deuxième exemple de réalisation permet d'économiser la/les vis autrement utilisée(s) pour fixer la platine de fixation au plateau de maintien, ce qui représente, à grande échelle, des économies de temps et d'argent.

Ce deuxième exemple de réalisation diffère également du premier exemple de réalisation par l'étendue de l'ouverture 342 qui reçoit l'aile de positionnement 330. En d'autres termes, selon le premier exemple de réalisation décrit ci-dessus, le plateau de maintien 340 comprend une unique ouverture qui s'étend entre deux bords opposés du plateau de maintien tandis que, selon le deuxième exemple de réalisation illustré sur les figures 6 et 7, deux ouvertures 342 sont ménagées dans le plateau de maintien 340, de part et d'autre de la tige 324 qui participe à former le deuxième moyen de fixation 322. Il en découle que l'aile de positionnement 330 est quant à elle séparée, depuis son extrémité opposé à la platine d'ancrage 311, en deux branches 332 parallèles entre elles, chacune de ces branches 332 étant destinée à être reçue dans l'une des ouvertures 342 du plateau de maintien 340. Il est entendu que lorsque le plateau de maintien 340 comprend l'évidement 325 plutôt que la tige 324, les ouvertures 342 sont réparties de part et d'autre de cet évidement 325.

Tel que représenté, le plateau de maintien 340 vient en butée contre une tranche 336 de l'aile de positionnement 330 depuis laquelle s'étendent les deux branches 332. Autrement dit, la première surface d'appui 331 est, selon l'exemple illustré sur les figures 6 et 7, délimitée d'une part par la platine de fixation 311 et d'autre part par cette tranche 336 de l'aile de positionnement 330.

On note enfin que, selon l'exemple illustré sur ces figures 6 et 7, deux manchons 352 viennent recouvrir chacune des branches 332 de l'aile de positionnement 330 qui s'étendent dans la zone de garde 350 précédemment décrite. Plus particulièrement, ces manchons 352 ne sont illustrés que sur la figure 6, afin de rendre visible les ouvertures 342 du premier moyen de fixation sur la figure 7. Tel que représenté, une première extrémité 353 de chaque manchon 352 est formée par l'une des ouvertures 342 du premier moyen de fixation et une deuxième extrémité 354 du manchon 352, opposée à la première extrémité 353 le long de la direction de doublage X, est fermée par la platine de fixation 320. Bien que non illustrées, on comprend que des vis traversant les manchons 352 et les branches 332 peuvent également être mises en place pour assurer le la fixation du plateau de maintien 340 sur l'aile de positionnement 330, ces vis formant alors le deuxième moyen de fixation évoqué précédemment.

Alternativement, les manchons peuvent être issus de matière avec le plateau de maintien, c'est-à-dire qu'ils forment alors un unique ensemble qui ne peut être séparé sans entrainer la détérioration d'au moins l'un des manchons ou du plateau de maintien. Selon une autre alternative, le dispositif d'entretoisement ne comprend qu'un seul manchon, issu de matière ou non avec le plateau de maintien, ce manchon comprenant alors un sillon de réception de la tige.

Selon une variante de ce deuxième exemple de réalisation non illustrée ici, on pourra prévoir d'interposer une membrane d'étanchéité entre la platine de fixation et le plateau de maintien. On comprend que selon cette variante, la membrane d'étanchéité est plus particulièrement maintenue par la tige et percée exclusivement par cette tige, limitant ainsi la circulation de flux d'air et de vapeur d'eau. En d'autres termes, la membrane d'étanchéité est percée par la tige puis cette tige est insérée dans l'évidement tel que décrit ci-dessus. Avantageusement, cette membrane d'étanchéité, dite membrane pare-vapeur est réalisée en un matériau qui permet de laisser plus ou moins passer la vapeur d'eau.

La figure 8 illustre une première variante de réalisation de la présente invention dans laquelle le premier moyen de blocage 370 du premier moyen de fixation du plateau de maintien 340 sur le moyen d'ancrage 310 forme un moyen d'ajustement de la position du plateau de maintien 340 par rapport à la platine d'ancrage 311. Autrement dit, le premier moyen de blocage 370 selon cette première variante de réalisation de l'invention permet de régler une distance entre le plateau de maintien 340 et la platine d'ancrage 311. Plus particulièrement cette distance est mesurée entre la platine d'ancrage 311 et le plateau de maintien 320, parallèlement à la direction de doublage X. Autrement dit, cette première variante de la présente invention permet de réaliser un réglage le long de cette direction de doublage X de manière à pouvoir utiliser un même dispositif d'entretoisement 301 pour la fixation de panneaux d'isolation d'épaisseurs différentes, par exemple d'un chantier à un autre.

Selon cette première variante, l'aile de positionnement 330 comprend les deux branches 332 précédemment décrites. Ces branches 332 délimitent une zone de réglage 333 qui abrite le premier moyen de blocage 370 réparti entre l'aile de positionnement 330 et le plateau de maintien 340. Ainsi, le premier moyen de blocage 370 selon cette première variante comprend au moins deux crans 335 ménagés sur un bord latéral de l'une et/ou l'autre des deux branches 332 de l'aile de positionnement 330 et au moins une dent 348 portée par le plateau de maintien 340 et configurée pour venir en butée contre l'un des crans 335 portés par l'aile de positionnement 330 de sorte à bloquer en position l'aile de positionnement 330 par rapport au plateau de maintien 340, le long de la direction de doublage X. Plus particulièrement, le premier moyen de blocage 370 selon cette première variante comprend une pluralité de crans 335 avec lesquels l'au moins une dent 348 est apte à coopérer.

Selon l'exemple illustre sur la figure 8, on note que le plateau de maintien 340 comprend deux languettes 349 qui s'étendent parallèlement à la direction de doublage X en éloignement du plateau de maintien 340, vers la platine de fixation 320, et qui sont, chacune, munie d'une dent 348 dont la fonction a été exposée au paragraphe précédent. Ces deux dents 348 s'étendent, en éloignement l'une de l'autre, selon une direction transversale Y à la direction de doublage X, par exemple de manière orthogonale. Pour permettre la coopération des dents 248 portées par ces languettes 349 avec les crans 335 ménagés sur les bords latéraux des branches 332 de l'aile de positionnement 330, chacune de ces languettes 349 est élastiquement déformable dans le deuxième plan P2 dans lequel s'étend principalement la première surface d'appui 331 destinée à recevoir le chant du panneau d'isolation. On comprend ainsi que la distance entre la platine d'ancrage 320 et le plateau de maintien 340 est maîtrisée par le choix des crans 335 en butée desquels sont agencées les dents 348 portées par le plateau de maintien 340. Cette première variante permet ainsi d'utiliser le dispositif d'entretoisement 301 selon l'invention avec des panneaux d'isolation qui présentent différentes épaisseurs. Avantageusement, cela permet une standardisation de la pièce, et ainsi des économies d'échelle lors de la production.

On comprend que cette première variante est applicable à la fois au premier et au deuxième exemple de réalisation décrits et illustrés ci-dessus.

Par ailleurs, le premier moyen de fixation illustré sur la figure 8 diffère également des exemples de réalisation précédemment décrits par l'ouverture 342. Selon l'exemple illustré sur la figure 8, le premier moyen de fixation comprend ainsi deux ouvertures 342 réparties de part et d'autre des deux languettes 349 et qui s'étendent jusqu'à un bord du plateau de maintien 340. En d'autres termes, ces ouvertures 342 présentent, selon l'exemple illustré sur la figure 8, une extrémité transversale, c'est-à-dire une extrémité le long de la direction transversale Y, ouverte.

Selon un exemple non illustré ici, on pourra également prévoir un moyen de réglage d'une distance mesurée entre le plateau de maintien et la platine de fixation, le long de la direction de doublage. Tel que précédemment évoqué, il peut par exemple être prévu de faire passer différents câbles, par exemple d'alimentation électrique, dans la zone de garde générée entre cette platine de fixation et le plateau de maintien. Avantageusement, un tel moyen de réglage permet ainsi d'adapter la taille de la zone de garde ménagée entre le plateau de maintien et la platine de fixation en fonction des éléments que l'on souhaite y faire passer.

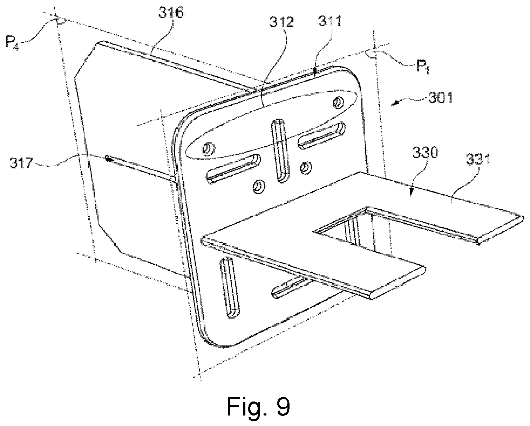

La figure 9 illustre, une deuxième variante de la présente invention, également applicable à la fois au premier et au deuxième exemples de réalisation précédemment décrits.

Selon cette deuxième variante, la platine d'ancrage 311 comprend un retour 316 qui s'étend transversalement à cette platine d'ancrage 311, en éloignement de l'aile de positionnement 330. Autrement dit, le retour 316 et l'aile de positionnement 330 émergent toutes deux de la platine de fixation 311 et s'étendent en éloignement l'une de l'autre, selon deux directions opposées, c'est-à-dire qu'elles émergent, chacune, d'une face distincte de la platine de fixation 311. Par ailleurs, le retour 316 s'étend principalement dans un quatrième plan P4 transversal au premier plan P1 dans lequel s'étend principalement la platine d'ancrage 311. Selon l'exemple particulièrement illustré sur la figure 9, le premier plan P1 et le quatrième plan P4 sont perpendiculaires l'un à l'autre.

Tel que représenté, un trou oblong 317 est ménagé dans ce retour 316, ce trou oblong 317 étant destiné à recevoir un organe de fixation, tel que par exemple une vis. Avantageusement, on comprend que l'utilisation de ce trou oblong 317 ménagé dans le retour 316 tel que décrit ci-dessus, permet de solidariser la platine d'ancrage 311 sur un côté de la structure à doubler, plutôt que sur une face de cette structure à doubler orientée vers la pièce à isoler, c'est-à-dire notamment dans le cas où la structure à doubler est former par des chevrons. Autrement dit, ce trou oblong 317 confère un degré de liberté à la fixation du dispositif d'entretoisement 301 sur la structure à doubler, ce qui permet de bien aligner l'ensemble des dispositifs d'entretoisement 301 utilisés sur une même structure à doubler, de sorte à aligner, au moins, les platines de fixation 320 respectives de ces dispositifs d'entretoisement 301, et donc, in fine, d'aligner les parements fixés à ces platines de fixation 320.

Bien sûr, l'invention n'est pas limitée aux exemples qui viennent d'être décrit et de nombreux aménagements peuvent être apportés à cet exemple sans sortir du cadre de l'invention.

L'invention propose donc un moyen simple et susceptible d'être standardisé pour porter des panneaux d'isolation thermique, notamment sous vide, par rapport à la structure d'un bâtiment sans avoir à détériorer de quelque manière que ce soit ledit panneau d'isolation, c'est-à-dire sans découpe ni moyen de fixation traumatisant. Il est entendu que l'invention ne se limite pas aux moyens décrits et illustrés ici et qu'elle s'étend également à tout moyen et configuration équivalents et à toute combinaison techniquement opérante de tels moyens. En particulier les moyens de fixation décrits pour la fixation des différentes pièces du dispositif d'entretoisement entre elles et pour la fixation du dispositif d'entretoisement sur la structure à doubler peuvent être modifiés sans nuire à l'invention dans la mesure où ils remplissent les fonctionnalités décrites dans le présent document.

## Revendications

1. Kit de fixation (300) d'un système de doublage (100) sur une structure à doubler, notamment une toiture, un mur (220) ou un plancher, le système de doublage (100) comprenant au moins une couche d'isolation (110) et un parement (120), la couche d'isolation (110) comprenant au moins deux panneaux d'isolation (111) juxtaposés, le kit de fixation (300) comprenant au moins un moyen d'ancrage (310) à la structure à doubler (200), au moins un plateau de maintien (340) de la couche d'isolation (110) et au moins une platine de fixation (320) destinée à la fixation du parement (120) le moyen d'ancrage (310) comprenant au moins une aile de positionnement (330) de la couche d'isolation (110).

2. Dispositif d'entretoisement (301) comprenant un kit de fixation (300) selon la revendication précédente, le dispositif d'entretoisement (301) comprenant au moins :
- le moyen d'ancrage (310) à ladite structure à doubler (2),
- l'aile de positionnement (330) des panneaux d'isolation (111) comportant au moins une première surface d'appui (331) destinée à recevoir un chant (113) d'au moins un panneau d'isolation (111),
- le plateau de maintien (340), s'étendant transversalement à la première surface d'appui (331) de l'aile de positionnement (330), le plateau de maintien (340) comprenant au moins un premier moyen de fixation (341) configuré pour permettre sa fixation sur l'aile de positionnement (330), et
- la platine de fixation (320) munie d'au moins une deuxième surface d'appui (321) destinée à recevoir le parement (120), la platine de fixation (320) comprenant au moins un deuxième moyen de fixation (322) pour permettre sa fixation sur l'aile de positionnement (330) ou sur le plateau de maintien (340).

3. Dispositif d'entretoisement (301) selon la revendication précédente, dans lequel l'aile de positionnement (330) et le plateau de maintien (340) forment une structure en T ou en L.

4. Dispositif d'entretoisement (301) selon l'une quelconque des revendications 2 ou 3, dans lequel l'au moins un moyen d'ancrage (310) comprend une platine d'ancrage (311) fixée à la structure à doubler (200) par au moins un troisième moyen de fixation (312).

5. Dispositif d'entretoisement (301) selon la revendication précédente, dans lequel la platine d'ancrage (311) et l'aile de positionnement (330) forment une structure en T ou en L.

6. Dispositif d'entretoisement (301) selon l'une quelconque des revendications 4 ou 5, dans lequel la platine d'ancrage (311) porte au moins un retour (316) s'étendant transversalement à ladite platine d'ancrage (311) et dans une direction opposée à l'aile de positionnement (330).

7. Dispositif d'entretoisement (301) selon l'une quelconque des revendications 2 à 6, dans lequel le premier moyen de fixation (341) comprend au moins une ouverture (342) ménagée dans le plateau de maintien (340) et au moins un moyen de blocage (370) en position de l'aile de positionnement (330) par rapport au plateau de maintien (340), l'aile de positionnement (330) traversant le plateau de maintien (340) par l'au moins une ouverture (342).

8. Dispositif d'entretoisement (301) selon l'une quelconque des revendications 2 à 7, dans lequel l'aile de positionnement (330) est divisée, à son extrémité distale opposée au moyen d'ancrage (310), en deux branches (332) s'étendant dans une direction de doublage (X) et parallèles l'une à l'autre.

9. Dispositif d'entretoisement (301) selon les revendications 7 et 8, dans lequel les deux branches (332) délimitent entre elles une zone de réglage (333) abritant, au moins partiellement, l'au moins un moyen de blocage (370) du premier moyen de fixation (341).

10. Dispositif d'entretoisement (301) selon la revendication précédente, dans lequel l'au moins un moyen de blocage (370) du premier moyen de fixation (341) comprend au moins deux crans (335) ménagés sur au moins l'une des branches (332) de l'aile de positionnement (330) et au moins une dent (348) portée par le plateau de maintien (340), l'au moins une dent (348) étant adaptée pour coopérer avec les au moins deux crans (335) pour bloquer la position du plateau de maintien (340) par rapport à l'aile de positionnement (330).

11. Dispositif d'entretoisement (301) selon l'une quelconque des revendications 7 à 9, dans lequel les branches (332) présentent des longueurs identiques, cette longueur définissant une zone de garde (350) ménagée entre le plateau de maintien (340) et la platine de fixation (320),

12. Dispositif d'entretoisement (301) selon l'une quelconque des revendications 7 à 10, dans lequel la première surface d'appui (331) s'étend entre la platine d'ancrage (311) et une tranche (336) de l'aile de positionnement (330) à partir de laquelle cette aile de positionnement (330) est divisée en les deux branches (332).

13. Dispositif d'entretoisement (301) selon l'une quelconque des revendications 2 à 9, dans lequel la platine de fixation (320) et le plateau de maintien (340) sont rendus solidaires l'un de l'autre par une tige (324) reçue dans un évidement (325).

14. Dispositif d'entretoisement (301) selon la revendication précédente, dans lequel au moins une nervure primaire (326) est formée à la périphérie de ladite tige (324) et dans lequel l'évidement (325) présente au moins une nervure secondaire (327) faisant saillie vers l'intérieur de l'évidement (325), la nervure secondaire (327) étant adaptée pour coopérer avec la nervure primaire (326) pour le blocage relatif de la platine de fixation (320) par rapport au plateau de maintien (340) le long de la direction de doublage (X).

15. Dispositif d'entretoisement (301) selon l'une quelconque des revendications précédentes, dans lequel une face (360) du plateau de maintien (340) tournée vers le moyen d'ancrage (310) est plane.

16. Dispositif d'entretoisement (301) selon l'une quelconque des revendications précédentes, dans lequel un tunnel borgne (328) s'étend depuis la platine de fixation (320) en direction du plateau de maintien (340), ce tunnel borgne (328) recevant une extrémité distale de l'aile de positionnement (330) opposée au moyen d'ancrage (310).

17. Système de doublage (100) pour une structure à doubler (200) comprenant une pluralité de dispositifs d'entretoisement (301) selon l'une quelconque des revendications 2 à 16 fixés sur la structure à doubler (200), une couche d'isolation (110) formée d'une pluralité de panneaux d'isolation (111) juxtaposés, chaque panneau d'isolation (111) comprenant deux faces principales (112) et un chant (113) reliant lesdites faces principales (112), et un parement (120), dans lequel le chant (113) d'au moins un panneau d'isolation (111) est en appui sur au moins une aile de positionnement (330) d'un dispositif d'entretoisement (301), le plateau de maintien (340) dudit dispositif d'entretoisement (301) étant en appui contre une face principale (112) dudit panneau d'isolation (111), et le parement (120) est en appui direct sur la deuxième surface d'appui (321) de la platine de fixation (311).

18. Système de doublage (100) selon la revendication précédente, dans lequel au moins un des panneaux d'isolation (111) est un panneau sous vide.

19. Procédé de doublage d'une structure à doubler (200) comprenant au moins une étape de fixation d'au moins deux dispositifs d'entretoisement (301) selon l'une quelconque des revendications 2 à 16 sur la structure à doubler (200), une étape de positionnement d'au moins un panneau d'isolation (111) en appui sur les premières surfaces d'appui (331) des ailes de positionnement (330) de chaque dispositif d'entretoisement (301), au moins une étape de fixation d'un plateau de maintien (340) sur chaque aile de positionnement (330), au moins une étape de fixation d'une platine de fixation (320) sur chaque plateau de maintien (340) et au moins une étape de fixation d'un parement (120) sur au moins une platine de fixation (320).
